# EUROPEAN PATENT APPLICATION

(11) **EP 2 869 063 A1**
(43) Date of publication of application: **06.05.2015**
(21) Application number: 12878816.3
(22) Date of filing: 14.06.2012
(51) Int. Cl.: G01N 21/27, G01N 21/78

(54) **DETECTION DEVICE AND METHOD**

(71) Applicant: Tianjin Huac Healthcare Technology Co., Ltd., Tianjin 300380 (CN)
(72) Inventor: QU, Wei, Tianjin 300380 (CN); ZHU, Danjun, Tianjin 300380 (CN); WU, Yufeng, Tianjin 300380 (CN)
(74) Representative: Wilson, Gary
(86) International application number: PCT/CN2012/076881
(87) International publication number: WO 2013/185313

(57) **Abstract**

A detection device and method. The detection device comprises: a test paper, provided with a test region of a first color, the test region showing a second color after sensing the presence or a concentration of a tested substance; a light source (110), capable of emitting light of at least two wavelengths, used to illuminate the test region and connected to a microprocessor (140); a light detection element (120), used to detect the reflected light from the test region, to convert the light signal of the detected reflected light into an electric signal and to send the electric signal to an A/D conversion circuit (130), the light detection element being connected to the microprocessor (140); the A/D conversion circuit (130), used to perform analog/digital conversion of the electric signal and send the electric signal to the microprocessor (140); and the microprocessor (140), used to control the light source (110), the light detection element (120) and the A/D conversion circuit (130), and analyze and process the electric signal after the analog/digital conversion of the electric signal is performed, so as to determine a detection result. In the detection device and method, a referent region is not needed, utilization of multiple sets of light sources and light detection elements can be prevented, and therefore cost is lowered, and detection processes are simplified.

## Description

### FIELD

The present invention relates to the technical field of liquid detection, and in particular to a detection device and a detection method applicable for the detection of presence or concentration of a substance to be tested.

### BACKGROUND

In daily work and life, it is usually necessary to detect whether a substance exists or reaches a certain concentration in a liquid, and then a corresponding process is performed according to the detection result. For example, the quality or pollution level of a water supply may be determined by detecting the concentration of a certain amino acid in the water supply, or presence or absence of Human Chorionic Gonadotropin (abbreviated as HCG) in an urine may be detected to determine whether the owner of the urine is pregnant or not.

In the prior art, when presence or concentration of a substance to be tested in a liquid is detected, the liquid to be tested is generally loaded on a test paper and then a chromogenic result on the test paper is judged with a naked eye to come up with a detection conclusion. There is a certain degree of error in judging the chromogenic result with a naked eye, and therefore a digital detection pen for detecting presence or concentration of a substance to be tested in a liquid emerged.

For example, a current commercially available digital detection pen for urine detection comprises a shell, a liquid absorption block, a test paper and a detection circuit, and can be divided into a pen body and a pen cap in appearance. Urine is absorbed by the digital detection pen after the pen cap is uncovered, then the pen cap is covered and the digital detection pen is laid flat on a table for five minutes, and the detection result is obtained via a LCD display. The principle is as follows: after being absorbed by the liquid absorption block, the urine is transferred to the test paper and reacts with an antigen or antibody coated on the test paper. In the case that the substance to be tested reaches a detectable concentration, the test region of the test paper becomes red and the color of the test region is read by the detection circuit to obtain a detection result according to judgment of the color.

To obtain an accurate detection result, all existing digital detection pens use multiple sets of light sources and light detection devices as the detection circuit to detect multiple test regions and control regions, and the detection result is obtained by comparing the color of the test region and the color of the control region. The multiple sets of light sources and light detection devices render cost of the existing digital detection pen relatively higher and the detection process relatively complicated.

### SUMMARY

To address the above technical issues, a detection device and a detection method are provided according to the embodiment of the present disclosure, so as to lower the cost of the detection device and simplify the detection process, and the technical solution is as follows.

A detection device applicable for the detection of presence or concentration of a substance to be tested in a liquid comprises:
a test paper, provided with a test region of a first color, the test region showing a second color after sensing the presence or a concentration of a tested substance;
a light source capable of emitting light of at least two wavelengths, used to illuminate the test region, and connected to a microprocessor;
a light detection element, used to detect the reflected light from the test region, to convert the light signal of the detected reflected light into an electric signal and to send the electric signal to an A/D conversion circuit, the light detection element being connected to the microprocessor;
the A/D conversion circuit, used to perform analog/digital conversion of the electric signal and send the converted electric signal to the microprocessor;
the microprocessor, used to control the light source, the light detection element, and the A/D conversion circuit, and analyze and process the electric signal after the analog/digital conversion, so as to determine a detection result.

Preferably, the detection device further comprises:
a liquid absorption block in contact with the test paper and configured to absorb the liquid to be tested.

Preferably, the detection device further comprises:
a display, configured to display the detection result determined by the microprocessor.

Preferably, the light source is a light-emitting diode capable of emitting light of two wavelengths.

Preferably, the light detection element is a photoelectric tube.

Preferably, the display is a LCD display.

Preferably, the detection device further comprises a fastener configured to fasten the test paper.

Preferably, the detection device further comprises a power supply element.

A detection method applicable for the detection device provided according to the present disclosure is further provided according to the embodiment of the present disclosure. The method comprises:
controlling, by the microprocessor, the light source to successively emit light of a first wavelength and light of a second wavelength to the test region of the test paper before detection of the substance to be tested, and controlling, by the microprocessor, the light detection element to detect a first light signal corresponding to the light of the first wavelength reflected by the test region and a second light signal corresponding to the light of the second wavelength reflected by the test region;
determining a first reference value corresponding to the first light signal processed successively by the light detection element and the A/D conversion circuit and a first contrast value corresponding to the second light signal processed successively by the light detection element and the A/D conversion circuit;
controlling, by the microprocessor, the light source to successively emit light of the first wavelength and light of the second wavelength to the test region of the test paper when a predetermined time period elapses after the liquid to be tested is absorbed by the test paper, and controlling, by the microprocessor, the light detection element to detect a third light signal corresponding to the light of the first wavelength reflected by the test region and a fourth light signal corresponding to the light of the second wavelength reflected by the test region;
determining a second reference value corresponding to the third light signal processed successively by the light detection element and the A/D conversion circuit and a second contrast value corresponding to the fourth light signal processed successively by the light detection element and the A/D conversion circuit;
determining a first rate-of-change corresponding to the second contrast value and the first contrast value and a second rate-of-change corresponding to the second reference value and the first reference value;
judging whether the ratio of the first rate-of-change to the second rate-of-change is higher than a preset threshold; determining a first detection result indicating the presence or concentration of the substance to be tested in the test region in case that the ratio is higher than the preset threshold; otherwise, determining a second detection result indicating that the substance to be tested does not exist or the concentration of the substance to be tested does not reach the predetermined standard.

Preferably, the applicable detection device further comprises a display;
the method further comprises:
   displaying the determined first detection result or second detection result through the display.

Preferably, in the case that the ratio of the first rate-of-change to the second rate-of-change is higher than the preset threshold, the method further comprises:
determining a concentration range corresponding to the ratio of the first rate-of-change to the second rate-of-change based on a preset mapping relationship between a concentration range and a ratio range; and
determining the determined concentration range to be the first detection result.

Compared with the prior art, the device provided according to the present disclosure requires only one set of light sources and one set of light detection elements. The test region is illuminated by the light of different color emitted by the light source, the intensity of the light reflected by the test region in different-colored illumination condition is detected, and the detection result is determined by the related algorithm. In view of the above, in the detection device provided by the present invention, a referent region is not needed, use of multiple sets of light sources and light detection elements can be avoided, and therefore the cost is lowered, and the detection processes are simplified.

### BRIEF DESCRIPTION OF THE DRAWINGS

In order to illustrate the technical solutions according to the examples of the present disclosure or in the prior art more clearly, drawings to be used in the description of the examples or the prior art will be briefly described below. Apparently, the drawings described below are only some examples of the present invention, and other drawings can be obtained by those skilled in the art according to those drawings without creative efforts.
Figure 1 is a structural schematic diagram of a detection device according to an example of the present invention;
Figure 2 is a flow chart of a detection method according to an example of the present invention; and
Figure 3 is another flow chart of a detection method according to an example of the present invention.

### EMBODIMENTS

Hereinafter, the technical solutions in the examples of the present invention will be described clearly and completely in conjunction with the drawings in the examples of the present invention. Apparently, the described examples are only a part but not all of the examples of the present invention. All the other embodiments can be obtained by those skilled in the art without creative efforts on the basis of the examples of the present invention, all of which fall within the scope of protection of the present invention.

The detection device provided in the prior art such as a digital detection pen is provided with multiple sets of light sources and light detection elements, which leads to high cost and complicated detection processes.

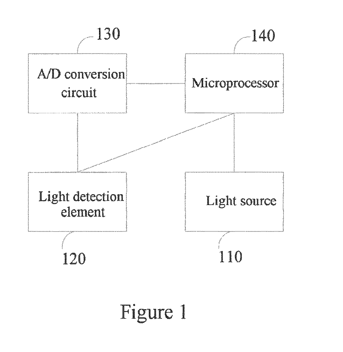

To address the technical problem in the prior art, as shown in Figure 1, there is provided a detection device in an example of the present invention, which is applicable for the detection of presence or concentration of a substance to be tested in a liquid. The detection device can comprise:
a test paper (not shown in Figure 1), provided with a test region of a first color, the test region showing a second color after sensing the presence or a concentration of the tested substance;
a light source 110, capable of emitting light of at least two wavelengths, used to illuminate the test region, and connected to a microprocessor 140;
a light detection element 120, used to detect the reflected light from the test region, to convert the light signal of the detected reflected light into an electric signal and to send the electric signal to an A/D conversion circuit 130, and connected to the microprocessor 140;
the A/D conversion circuit 130, used to perform analog/digital conversion of the electric signal and send the converted electric signal to the microprocessor 140;
the microprocessor 140, used to control the light source 110, the light detection element 120, and the A/D conversion circuit 130, and analyze and process the electric signal after the analog/digital conversion, so as to determine a detection result.

It should be noted that, since the first color or the second color exhibited by the test region of the test paper has different reflectivity for light of different colors, light of different colors can be utilized to illuminate the test region before and after immersion respectively, and the color currently exhibited by the test region can be determined based on the light signal of the reflected light from the test region. During the detection process utilizing the detection device provided according to the examples of the present invention, light of one of the wavelengths emitted by the light source is taken as a reference light, and light of another wavelength is taken as a contrast light. The light source is controlled to emit the reference light and the contrast light successively to illuminate the test region of the test paper before and after the immersion in the liquid to be tested respectively. Two light signals corresponding to the reference light reflected by the test region and two light signals corresponding to the contrast light reflected by the test region are collected by the light detection element, and are processed by the light detection element and the A/D conversion circuit. Then two reference values corresponding to the reference light and two contrast values corresponding to the contrast light are determined by the microprocessor, and it is determined whether the test paper changes from the first color to the second color after immersion by judging whether the ratio of the contrast value rate-of-change to the reference value rate-of-change is higher than a preset threshold. The threshold required for different detection scene is different, and the threshold can be obtained by analyzing multiple detection experiments.

Compared to the prior art, the device according to the present invention merely requires one set of light source and one set of light detection element. The test region is illuminated by light of different colors emitted by the light source, the intensity of the light reflected by the test region under illumination of light with different colors is detected, and the detection result is determined via related algorithm. It is thus obvious that, in the detection device according to the present invention, a referent region is not required, multiple sets of light sources and light detection elements are avoided, and therefore the cost is reduced, and the detection process is simplified.

It should be noted that, there is a large gap in reflectivity of one kind of color for light of the same color and light of a largely different wavelength (that is, color difference is large). Therefore, for the purpose of accuracy, the reference light and the contrast light emitted by the light source 110 can be related to the second color exhibited by the test region after the presence or the concentration of the substance to be tested is sensed, where light of the wavelength corresponding to the second color is generally selected as the reference light, and light of a wavelength differing much from the wavelength corresponding to the second color is generally selected as the contrast light. For example, when the test region exhibits red color after sensing the presence or concentration of the substance to be tested, red light can be selected as the reference light and green light can be selected as the contrast light, and when the test region exhibits blue color after sensing the presence or concentration of the substance to be tested, blue light can be selected as the reference light and yellow light can be selected as the contrast light, which are all reasonable. In other words, the reference light and the contrast light of different wavelengths can be selected by the light source 110 according to the color exhibited by the test region of the test paper corresponding to the presence or the concentration of the substance to be tested in the liquid to be tested.

The liquid to be tested can be loaded on the test paper by manual immersion, or the device may be immersed by the liquid to be tested through a certain immersion aperture in the device. Furthermore, in order to simplify the manual operation, the detection device can further comprise a liquid absorption block which is in contact with the test paper for absorbing the liquid to be tested. When the test paper is to be immersed, the liquid to be tested can be absorbed by the liquid absorption block and is transferred to the test paper automatically to complete immersion of the test paper. It should be understood that, in practice, multiple test regions for detection of presence or concentration of one or more substances and a quality control region used to detect the validity of the test paper can be provided on the test paper. Therefore, through the detection device according to the present example, multiple test regions on one test paper can be detected by controlling the light source and the light detection element to obtain results regarding presence or absence of multiple substances in the liquid to be tested or the quality control result of the test paper, or one or more detection results can be deduced according to the detection condition of the multiple test regions.

Furthermore, in order to visually display the detection result determined by the microprocessor 140 to the user, the detection device can further comprise a display. The display can be a LCD display, but not limited thereto.

It should be understood by those skilled in the art that, in practice, the light source 110 can be a light-emitting diode capable of emitting light of two wavelengths, but not limited to the light-emitting diode, and the light-emitting diode can be selected according to the second color of the test paper. Likewise, in practice, the light detection element 120 can be, but not limited to, a phototube, which can be a vacuum phototube or a gas filled phototube, so as to convert the collected light signal into a corresponding electric signal.

Furthermore, in order to fasten the test paper, the detection device can further comprise a fastener configured to fasten the test paper. It should be understood that, the fastener can be an element configured to facilitate loading and unloading of the test paper, so that the detection device enables detection of many test papers.

Certainly, the detection device further comprises a power supply element for supplying power to power consumption modules in the detection device, such as the light source 110, the light detection element 120 and the microprocessor 140.

It should be understood that, the detection device can be enclosed into a digital detection pen. Alternatively, the detection device can be enclosed in the form of other portable devices, which are all reasonable.

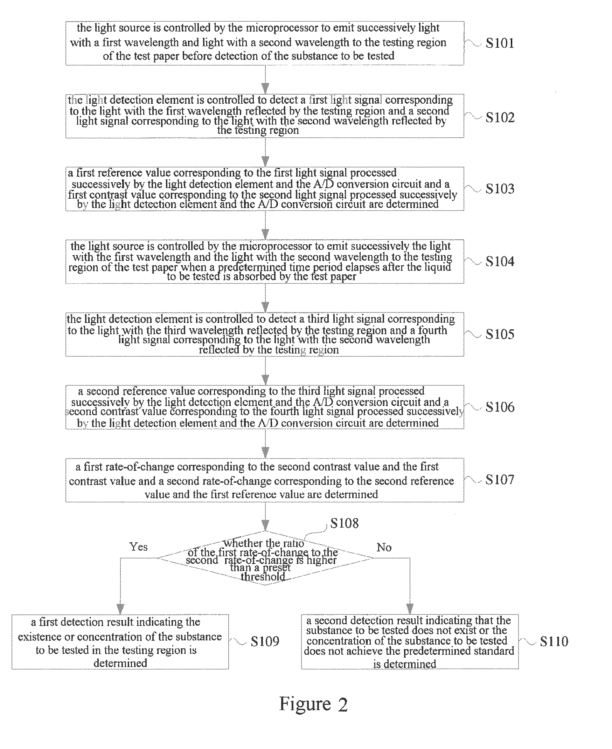

There is also provided a detection method in an example of the present invention with respect to the above-mentioned detection device, as shown in Figure 2. The detection method can comprise the following steps S101 to S110.

In step S101, the light source is controlled by the microprocessor to successively emit light of a first wavelength and light of a second wavelength to the test region of the test paper before detection of the substance to be tested.

The light of the first wavelength is taken as the reference light, and in order to obtain a more accurate detection result, the reference light can be selected to have a wavelength corresponding to the second color exhibited by the test paper after sensing the presence or concentration of the substance to be tested. The light of the second wavelength is taken as the contrast light, and the contrast light can be selected to have a wavelength differing much from the wavelength corresponding to second color, that is, the contrast light can be selected to have a color which has relatively large color difference with the second color.

In step S102, the light detection element is controlled to detect a first light signal corresponding to the light of the first wavelength reflected by the test region and a second light signal corresponding to the light of the second wavelength reflected by the test region.

In step S103, a first reference value corresponding to the first light signal processed successively by the light detection element and the A/D conversion circuit and a first contrast value corresponding to the second light signal processed successively by the light detection element and the A/D conversion circuit are determined.

In step S104, the light source is controlled by the microprocessor to successively emit the light of the first wavelength and the light of the second wavelength to the test region of the test paper when a predetermined time period elapses after the liquid to be tested is absorbed by the test paper.

The predetermined time period can be determined according to actual situation. For example, in the case of pregnancy detection with urine, the light source can be controlled to emit light of different wavelengths in 2 minutes to 5 minutes after the test paper is immersed by urine.

In step S105, the light detection element is controlled to detect a third light signal corresponding to the light of the first wavelength reflected by the test region and a fourth light signal corresponding to the light of the second wavelength reflected by the test region.

In step S106, a second reference value corresponding to the third light signal processed successively by the light detection element and the A/D conversion circuit and a second contrast value corresponding to the fourth light signal processed successively by the light detection element and the A/D conversion circuit are determined.

In step S107, a first rate-of-change corresponding to the second contrast value and the first contrast value and a second rate-of-change corresponding to the second reference value and the first reference value are determined.

In step S108, it is judged whether the ratio of the first rate-of-change to the second rate-of-change is higher than a preset threshold; step S109 is performed in the case that the ratio is higher than the preset threshold; otherwise, step S110 is performed.

It should be understood that the thresholds required for different detection scenes are different, and the threshold can be obtained by analyzing multiple detection experiments.

In step S109, a first detection result indicating the presence or concentration of the substance to be tested in the test region is determined.

In step S110, a second detection result indicating that the substance to be tested does not exist or the concentration of the substance to be tested does not achieve the predetermined standard is determined.

It should be understood that, the first detection result or the second detection result can be the color exhibited by the test region of the test paper after immersion, or can be the result corresponding to the color exhibited by the test region of the test paper after immersion. For example, during determination of whether the owner of urine is pregnant via detection of whether Human Chorionic Gonadotropin (abbreviated as HCG) exists in the urine, the determined detection result can be red/white color exhibited in the test region, or can be a negative/positive result.

In this example, the test region is illuminated by light of different colors emitted by the light source, the intensity of the light reflected by the test region under illumination of light with different colors is detected, and the detection result is determined via related algorithm. It is thus obvious that, in the detection device according to the present invention, a referent region is not required, multiple sets of light sources and light detection elements are avoided, and therefore the cost is reduced, and the detection process is simplified.

When it is determined that the substance to be tested exists or the concentration of the substance achieves the predetermined standard, the concentration range of the substance to be tested in the liquid to be tested can be further determined by a particular algorithm for the purpose of quantitative or semi quantitative analysis. Therefore, in another example of the present invention, in the case that the ratio of the first rate-of-change to the second rate-of-change is higher than the preset threshold, the detection method can further comprises:
determining a concentration range corresponding to the ratio of the first rate-of-change to the second rate-of-change based on a preset mapping relationship between a concentration range and a ratio range; and
determining the determined concentration range to be the first detection result.

It should be understood that, the above-mentioned detection device can be used to previously determine the mapping relationship between the concentration range and the ratio range through a plurality of tests. Then the corresponding concentration range in the mapping relationship is taken as the first detection result after the ratio of the first rate-of-change to the second rate-of-change is determined.

Furthermore, the applicable detection device can further comprise a display; and
the method can further comprise:
displaying the determined first detection result or second detection result on the display.

Certainly, information displayed on the display can be the color of the test region of the test paper after immersion, or can be the result corresponding to the color exhibited by the test region of the test paper after immersion.

Detection of presence or absence of HCG in urine is taken as a specific example below to introduce the detection method according to the present invention. Certainly, the detection method according to the present invention is not limited to detection of presence or absence of HCG in urine, and can also be used to detect the presence or concentration of a substance to be tested in other liquids.

It should be noted that, the detection method is applicable for the detection device provided herein. The test region of the test paper used in the detection device exhibits white color before immersion, exhibits red color after immersion into an urine containing HCG, and does not exhibit red color after immersion into an urine without HCG. The light source is a light-emitting diode capable of emitting red light and green light. The light detection element is a phototube. The detection device further comprises a LCD display.

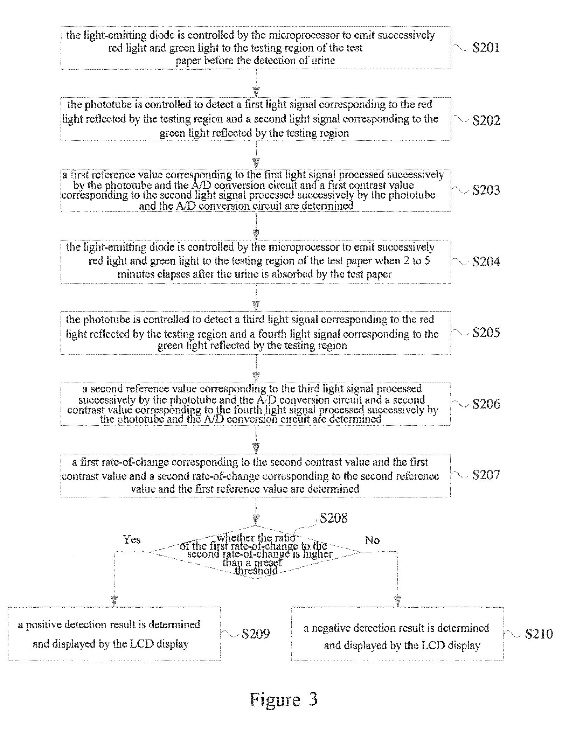

As is shown in Figure 3, a detection method can comprise steps S201 to S210.

In step S201, the light-emitting diode is controlled by the microprocessor to successively emit red light and green light to the test region of the test paper before the detection of urine.

In step S202, the phototube is controlled to detect a first light signal corresponding to the red light reflected by the test region and a second light signal corresponding to the green light reflected by the test region.

In step S203, a first reference value corresponding to the first light signal processed successively by the phototube and the A/D conversion circuit and a first contrast value corresponding to the second light signal processed successively by the phototube and the A/D conversion circuit are determined.

In step S204, the light-emitting diode is controlled by the microprocessor to successively emit red light and green light to the test region of the test paper when five minutes elapses after the urine is absorbed by the test paper.

In step S205, the phototube is controlled to detect a third light signal corresponding to the red light reflected by the test region and a fourth light signal corresponding to the green light reflected by the test region.

In step S206, a second reference value corresponding to the third light signal processed successively by the phototube and the A/D conversion circuit and a second contrast value corresponding to the fourth light signal processed successively by the phototube and the A/D conversion circuit are determined.

In step S207, a first rate-of-change corresponding to the second contrast value and the first contrast value and a second rate-of-change corresponding to the second reference value and the first reference value are determined.

In step S208, it is judged whether the ratio of the first rate-of-change to the second rate-of-change is higher than a preset threshold; step S209 is performed in the case that the ratio is higher than the preset threshold; otherwise, step S210 is performed.

The preset threshold is obtained by performing a plurality of experiments. A ratio of the first rate-of-change to the second rate-of-change which is higher than the preset threshold indicates that the test region exhibits red color after immersion in urine, that is, HCG exists in the urine and the detection result is positive. A ratio of the first rate-of-change to the second rate-of-change which is not higher than the preset threshold indicates that the test region doesn't exhibit red color after immersion in urine, that is, HCG doesn't exist in the urine and the detection result is negative.

In step S209, a positive detection result is determined and displayed by the LCD display.

In step S210, a negative detection result is determined and displayed by the LCD display.

In this example, the test region is illuminated by red light and green light emitted by the light-emitting diode, the intensity of the light reflected by the test region under illumination of light with different colors is detected, and the detection result is determined via related algorithm. It is thus obvious that, in the detection device according to the present invention, a referent region is not required, multiple sets of light sources and light detection elements are avoided, and therefore the cost is reduced, and the detection process is simplified.

In the examples provided herein, it should be understood that the disclosed system, device and method can be implemented in other ways without deviating from the spirit and scope of the present application. The current examples are only for illustration and should not be construed as a limitation. In other word, the specific disclosure herein is not to limit the present application. For example, the division of the unit or sub-unit is only a logical function division, and other division manners are allowable in practice. For example, multiple units or multiple sub-units are combined. Furthermore, multiple units or components can be combined or integrated into another system, or some features can be omitted or not performed.

In addition, the described system, device and method as well as schematic diagrams in different examples can be combined or integrated with other systems, modules, techniques or methods, without departing from the scope of the present application. Moreover, the illustrated or discussed coupling or direct coupling or communication connection with each other can be indirect coupling or communication connection via some interfaces, devices or units, and can be of electrical, mechanical or other form.

The forgoing description is only embodiments of the present invention. It should be noted that numerous improvements and modifications can further be made by those skilled in the art without departing from the principle of the present invention and those improvements and modifications should fall into the scope of protection of the present invention.

## Claims

1. A detection device applicable for the detection of presence or concentration of a substance to be tested in a liquid, the detection device comprising:
a test paper, provided with a test region of a first color, the test region showing a second color after sensing the presence or concentration of the substance to be tested;
a light source capable of emitting light of at least two wavelengths, used to illuminate the test region and connected to a microprocessor;
a light detection element, used to detect the reflected light from the test region, to convert the light signal of the detected reflected light into an electric signal and to send the electric signal to an A/D conversion circuit, the light detection element being connected to the microprocessor;
the A/D conversion circuit, used to perform analog/digital conversion of the electric signal and send the converted electric signal to the microprocessor; and
the microprocessor, used to control the light source, the light detection element, and the A/D conversion circuit, and analyze and process the electric signal after the analog/digital conversion to determine a detection result.

2. The device according to claim 1, further comprising:
a liquid absorption block in contact with the test paper and configured to absorb the liquid to be tested.

3. The device according to claim 1, further comprising:
a display configured to display the detection result determined by the microprocessor.

4. The device according to claim 1, wherein the light source is a light-emitting diode capable of emitting light of two wavelengths.

5. The device according to claim 1, wherein the light detection element is a photoelectric tube.

6. The device according to claim 3, wherein the display is a LCD display.

7. The device according to claim 1, further comprising a fastener configured to fasten the test paper.

8. The device according to claim 1, further comprising a power supply element.

9. A detection method applicable for the detection device according to claim 1, the method comprising:
controlling, by the microprocessor, the light source to successively emit light of a first wavelength and light of a second wavelength to the test region of the test paper before detection of presence or concentration of a substance to be tested, and controlling, by the microprocessor, the light detection element to detect a first light signal corresponding to the light of the first wavelength reflected by the test region and a second light signal corresponding to the light of the second wavelength reflected by the test region;
determining a first reference value corresponding to the first light signal processed successively by the light detection element and the A/D conversion circuit and a first contrast value corresponding to the second light signal processed successively by the light detection element and the A/D conversion circuit;
controlling, by the microprocessor, the light source to successively emit light of the first wavelength and light of the second wavelength to the test region of the test paper when a predetermined time period elapses after the liquid to be tested is absorbed by the test paper, and controlling, by the microprocessor, the light detection element to detect a third light signal corresponding to the light of the first wavelength reflected by the test region and a fourth light signal corresponding to the light of the second wavelength reflected by the test region;
determining a second reference value corresponding to the third light signal processed successively by the light detection element and the A/D conversion circuit and a second contrast value corresponding to the fourth light signal processed successively by the light detection element and the A/D conversion circuit;
determining a first rate-of-change corresponding to the second contrast value and the first contrast value and a second rate-of-change corresponding to the second reference value and the first reference value; and
judging whether the ratio of the first rate-of-change to the second rate-of-change is higher than a preset threshold; determining a first detection result indicating the presence or concentration of the substance to be tested in the test region in the case that the ratio of the first rate-of-change to the second rate-of-change is higher than the preset threshold; otherwise, determining a second detection result indicating that the substance to be tested does not exist or the concentration of the substance to be tested is not up to the predetermined standard.

10. The method according to claim 9, wherein the applicable detection device further comprises a display; and
the method further comprises:
displaying the determined first detection result or second detection result on the display.

11. The method according to claim 9, further comprising, in the case that the ratio of the first rate-of-change to the second rate-of-change is higher than the preset threshold:
determining a concentration range corresponding to the ratio of the first rate-of-change to the second rate-of-change based on a preset mapping between a ratio range and a concentration range; and
determining the determined concentration range to be the first detection result.
